**Europäisches Patentamt**

**European Patent Office**

**Office européen des brevets**

(19)

(11) Numéro de publication: **0 034 528**
**B1**

(12)

# FASCICULE DE BREVET EUROPEEN

(45) Date de publication du fascicule du brevet:
09.05.84

(51) Int. Cl.³: **B 23 B 31/40**

(21) Numéro de dépôt: 81400203.6

(22) Date de dépôt: 10.02.81

(54) **Mandrin expansible.**

(30) Priorité: 19.02.80 FR 8003548

(43) Date de publication de la demande:
26.08.81 Bulletin 81/34

(45) Mention de la délivrance du brevet:
09.05.84 Bulletin 84/19

(84) Etats contractants désignés:
**DE GB IT SE**

(56) Documents cités:
**CH - A - 117 821**
**DE - A - 2 014 619**
**FR - A - 2 297 107**
**GB - A - 1 131 092**
**US - A - 1 708 228**
**US - A - 2 397 773**

(73) Titulaire: **TOBLER S.A. MECANIQUE de PRECISION**
**FRANCO-SUISSE, 21, Rue de Paris, F-95380 Louvres**
**(FR)**

(72) Inventeur: **Kanakaris, Georges, 10, rue Alfred de Musset,**
**F-93290 Tremblay-lès-Gonesse (FR)**

(74) Mandataire: **Morash, Daniel, 17, Avenue La Bruyère,**
**F-78160 Marly-le-Roi (FR)**

ACTORUM AG

## Description

La présente invention concerne un mandrin expansible dans lequel le chargement et le déchargement de la pièce à usiner s'effectue pendant la rotation du mandrin.

Dans les installations connues, on utilise des mandrins à coulisseaux qui sont maintenus en place par un jonc élastique circulaire. De tels joncs sont bien connus, par exemple de la demande de brevet allemand publiée DE-A-2 014 619 qui a été utilisée pour la délimitation de la revendication 1. L'utilisation de ces mandrins nécessite l'arrêt de la machine à chaque fois que l'on désire retirer la pièce usinée et la remplacer sur le mandrin par une nouvelle pièce devant être usinée.

La demande de brevet allemand publiée DE-A-2 014 619, dans sa figure 3, révèle un mandrin expansible dans lequel la pièce à usiner (8) est successivement centrée et serrée entre la face latérale (4'') d'une projection (4') radiale de chacun d'au moins deux coulisseaux (4) et une butée (1') fixée (ou faisant partie intégrale) sur le (du) plateau (1) de fixation du mandrin sur la machine-outil, lesdits coulisseaux (4) étant disposés dans des lumières pratiquées dans un corps (2) de mandrin axialement déplaçable à l'encontre d'une contre-pression élastique (6), de façon à pouvoir se déplacer radialement par rapport à l'axe longitudinal du mandrin, l'action de centrage et de serrage de la pièce (8) à usiner étant commandée par un piston (3) pourvu d'une partie conique (ou des rampes) à son extrémité qui est en contact avec des surfaces coniques correspondantes desdits coulisseaux (4); ce piston étant poussé vers l'arrière du mandrin pour effectuer le serrage définitif de cette pièce après qu'il ait parcouru une distance égale à une course de centrage radial pour reculer une distance égale à une course de serrage (ou desserrage) facial.

En effet, l'utilisation d'un tel mandrin connu pour l'usinage des pièces sur des machines-outils à rotation permanante est peu recommandable et même risquée. L'effort de rappel du jonc élastique, par l'effet de la force centrifuge agissant sur les coulisseaux, est insuffisant pour ramener ces coulisseaux en position de desserrage. En outre, le jonc risque de casser par l'effet de cette force centrifuge.

Par rapport à cet état de la technique, la présente invention remédie à cet inconvénient et crée un mandrin ayant un système de desserrage positif consistant à utiliser la force centrifuge pour effectuer le retrait automatique des coulisseaux dans des lumières prévues dans le corps du mandrin pour permettre le déchargement de la pièce à usiner pendant la rotation du mandrin.

Le mandrin expansible conforme à l'invention se distingue en ce que ce piston est poussé vers l'arrière du mandrin par l'action d'un premier moyen élastique après être libéré par le tirant de commande de serrage et de desserrage de ladite pièce à usiner, le serrage définitif de cette pièce étant effectué par ledit tirant après que celui-ci ait parcouru une distance égale à une course de serrage (ou desserrage) facial à l'encontre d'un deuxième moyen élastique; le desserrage de la pièce à usiner s'effectuant de manière positive par la force centrifuge agissant sur des masselottes disposées dans des lumières dans le corps du mandrin et reliées chacune par une chaîne mécanique à chaque coulisseau de façon à ce que chaque masselotte, par son déplacement radial résultant de l'action de la force centrifuge vers l'extérieur par rapport à l'axe longitudinal du mandrin, par l'intermédiaire de ladite chaîne mécanique, et après le déplacement vers l'avant du mandrin du piston de serrage (ou de desserrage) sous l'effet d'un déplacement vers l'avant dudit tirant de commande pour le desserrage de ladite pièce agit sur chaque coulisseau de façon à ce que celui-ci se rapporche radialement de l'axe longitudinal du mandrin pour complètement desserrer la pièce à usiuner et permettre son éjection, avant le chargement d'une nouvelle pièce à usiner.

Selon une autre caractéristique du mandrin, celui-ci, lors du desserrage de la pièce à usiner et lorsque chaque masselotte, par l'action de la force centrifuge, est déplacée radialement vers l'extérieur dans son logement dans le corps du mandrin, une première rampe disposée dans un évidement pratiqué dans la partie antérieure de la masselotte et ayant une pente montant vers l'arrière coopère avec l'extrémité arrière d'un organe de transmission de mouvement dont l'autre extrémité coopère avec une deuxième rampe disposée dans un évidement pratiqué dans la partie postérieure de chaque coulisseau correspondant, et ayant une pente montant vers l'avant de façon à ce que chaque coulisseau est rapproché de l'axe longitudinal du mandrin lorsque chaque masselotte correspondante s'éloigne de l'axe longitudinal du mandrin.

Selon encore une caractéristique de l'invention, ledit organe de transmission de mouvement est un axe dont les extrémités sont des parties tronconiques d'une longueur telle que chaque coulisseau est retenu dans sa lumière lors du desserrage total de la pièce à usiner.

Selon encore une caractéristique de l'invention, ledit organe de transmission peut être réalisé sous forme d'une série ou une chaîne de billes adjacentes.

Le mandrin conforme à l'invention est, en outre, remarquable, en ce que ladite rampe, dans chaque masselotte, et/ou ladite rampe, dans chaque coulisseau, sont la surface d'un évidement conique pratiqué dans ladite masselotte et/ou ledit coulisseau et que le poids de chaque masselotte est supérieur à celui du coulisseau correspondant.

Selon encore une autre caractéristique de l'invention un jeu de sécurité est prévu entre le corps du mandrin et le plateau pouvant être absorbé lorsque le mandrin n'est pas chargé d'une pièce à usiner.

Tandis que dans le document DE-A-2 014 619 le ressort (6) sert dans une première phase de maintenir le corps (2) dans sa position lors de l'actionnement du tirant (3) dans le sens de la flèche (fs) et lors du déplacement radial des coulisseaux (4). Ce n'est que lors d'une deuxième phase que le ressort (6) détermine le serrage de la pièce à usiner (8). Dans le mandrin selon la présente invention, par contre, il y a une action combinée de deux ressorts lors du serrage de la pièce à serrer. En outre, les divers ressorts peuvent très bien être remplacé par d'autres moyens élastiques (hydrauliques ou pneumatiques, par exemple).

Les avantages du mandrin conforme à l'invention sont multiples: il peut, en toute sécurité, travailler à des vitesses de rotation élevées; les coulisseaux ne peuvent pas quitter leur logement sous l'effet de la force centrifuge; simplicité de construction; précision de fonctionnement.

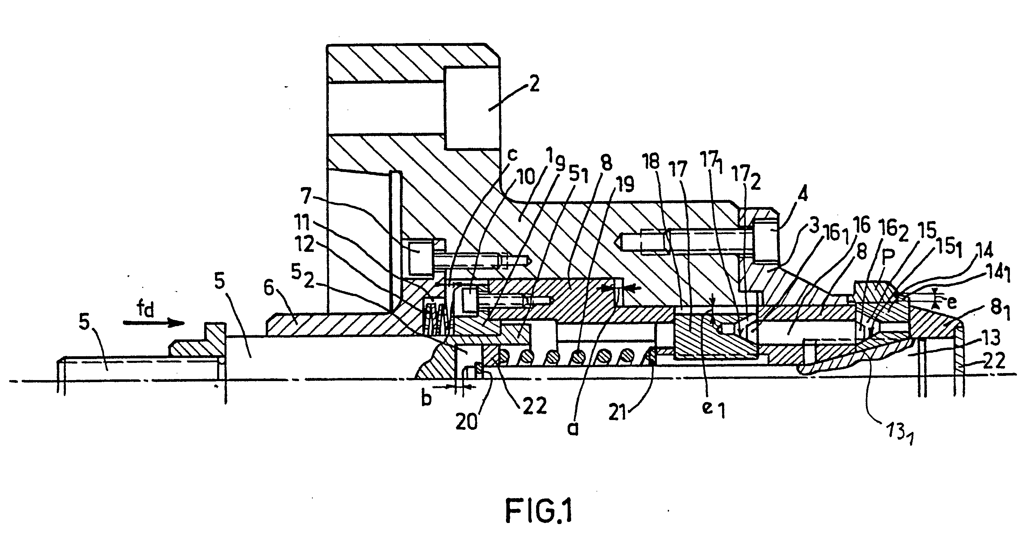

La figure 1 est une coupe longitudinale d'un mode de réalisation, donné à titre d'exemple, du mandrin conforme àl'invention en position de serrage de la pièce à usiner;

la figure 2 est une coupe longitudinale du mandrin de la figure 1 en position de desserrage de la pièce à usiner.

Dans les figures, le mandrin comporte un plateau 1 fixé sur la maschine-outil par des vis ou boulons 2. Une butée 3 est vissée sur la partie avant du plateau 1 par des vis 4. Un tirant 5 disposé à l'arrière du mandrin est actionné dans le sens de la flèche $f_s$ pour le serrage d'une pièce à usiner P et dans le sens $f_d$ pour le desserrage de cette pièce. Le mode d'actionnement de ce tirant 5 peut être manuel, hydraulique, pneumatique, électro-mécanique ou mécanique. Le tirant 5 est guidé dans une pièce 6 fixée sur le plateau 1 par des vis 7. Un évidement circulaire 11 est prévu dans cette pièce 6 pour y loger un ressort 12 qui s'appuie à l'arrière sur la face de l'évidement 11 at à l'avant sur une bague 9 fixée sur le corps de mandrin 8 par des vis 10. En position de serrage de la pièce P, il subsiste un jeu c entre la bague 9 et la pièce-guide 6. Ce jeu c est un jeu de sécurité pour le cas où le mandrin tourne sans être chargé d'une pièce 7. Le tirant 5, à sa partie avant, est pourvu d'un évidement $5_2$; à son extrémité avant la paroi de cet évidement $5_2$ est réalisé sous forme d'un rebord bridé 51 dont la face postérieure s'appuie sur la bague 9, permettant ainsi le déplacement dans le sens de la flèche $f_s$ du corps du mandrin, lors du serrage de la pièce à usiner P. Le corps 8 du mandrin est étagé; en position de serrage de la pièce P un jeu de desserrage facial a subsiste entre le corps 8 et le plateau 1. Le corps 8 est alésé sur toute sa longueur. Il est, en outre, pourvu de lumières 18 pour des masselottes 17, et à l'avant d'autres lumières pour des coulisseaux 14. Les masselottes et les coulisseaux peuvent se déplacer radialement dans ces lumières; ils se déplacent longitudinalement en même temps que le corps 8 lorsque celui-ci est sollicité en serrage — flèche $f_s$ — ou en desserrage — flèche $f_d$ —. Dans l'alésage du corps 8, un piston de commande de serrage 13 peut se déplacer dans le sens de la flèche $f_d$, lors du desserrage, par l'action du tirant 5 dont la face arrière de l'évidement 52 s'appuie sur l'arrière du piston 13 après avoir absorbé un jeu b de centrage radial. Le piston 13 peut se déplacer dans le sens de la flèche $f_s$ sous l'action d'un ressort 19 qui prend appui à l'avant sur un anneau 21 posé sur l'arrière d'une partie étagée de l'alésage du corps 8 et à l'arrière sur un anneau-butée 22 retenu sur le piston par un jonc 20. L'anneau-butée 22 est en contact par sa surface périphérique avec la surface intérieure de l'évidement $5_2$ du tirant 5 et peut donc se déplacer par rapport à celle-ci sous l'action dudit ressort 19. Les lumières 18 prévues pour les masselottes 17 ont la longueur de celles-ci de façon à ce que, dans le corps 8, les masselottes ne peuvent se déplacer que radialement. En position de serrage, il subsiste un jeu $e^1$ entre la masselotte 17 et le plateau 1. Dans la partie avant de la masselotte 17, il est pratiqué un évidement conique $17_2$, le sommet duquel se trouve à l'arrière; la pente 17 conique est calculée de façon à obtenir un frottement faible entre la surface de la pente conique $17_1$ et l'extrémité $16_1$ tronconique d'un axe 16 de rappel de coulisseaux 14, comme il sera expliqué plus loin. Evidemment, la pente de l'extrémité $16_1$ est égale à la pente $17_1$ de l'évidement $17_2$. La pente $17_1$ est disposée dans la masselotte de façon à ce que l'axe 16 puisse rapprocher les coulisseaux 14 à l'axe longitudinal du mandrin lorsque les masselottes 17 s'éloignent de l'axe longitudinal du mandrin sous l'effet de la farce centrifuge (due à la rotation permanente du mandrin). L'axe 16 est le chaînon principal de la chaîne mécanique entre les masselottes 17 et les coulisseaux 14. Les coulisseaux 14 ont une longueur égale à celle des lumières pratiquées dans le corps 8 de manière à ne pouvoir effectuer, par rapport au corps 8, que des déplacements radiaux. La partie inférieure $14_1$ des coulisseaux 14 est inclinée pour coopérer avec la partie conique $13_1$ du piston 13, c'est-à-dire glisser par rapport à celle-ci, lors des serrages et desserrages des pièces à usiner P. L'extrémité avant $16_2$ de l'axe 16 est également réalisée sous forme tronconique. La pente de cette extrémité $16_2$ peut être la même que celle de l'extrémité $16_1$ de l'axe 16. Un évidement 15 conique est prévu dans la partie arrière du coulisseau 14; la pente $15_1$ de la surface de cet évidement 15 est la même que celle de l'extrémité $16_2$ de l'axe 16. La pente et la disposition du cône sont calculées de manière à permettre un déplacement longitudinal relatif à faible frottement entre l'extrémité $14_1$ et la face de l'évidement 15.

Il est dans le cadre de l'invention de réaliser le chaînon central de la chaîne mécanique entre les masselottes et les coulisseaux sous forme d'une série ou une chaîne de billes.

Il est également dans le cadre de l'invention de réaliser les évidements dans les masselottes et/ou les coulisseaux sous forme d'une découpe, par exemple ouverte vers le haut, et dont la base est réalisée sous forme d'une rampe ayant une pente égale à celle des extrémités $16_1$, $16_2$ de l'axe 16 par exemple.

Les coulisseaux 14 sont à leurs parties avant pourvus de projections $14_1$ d'une hauteur égale à une distance e. Cette distance e est plus petite que la distance $e_1$ précitée.

La pièce P à usiner est serrée entre la face postérieure de ces projections $14_1$ et la face latérale de la butée 3.

Il va de soi que, pour le serrage, au moins deux coulisseaux soient utilisés. Dans l'exemple montré dans les figures, trois coulisseaux sont utilisés. Pour chaque coulisseau 14, il existe un axe 16 et une masselotte 17 correspondants. Evidemment les coulisseaux sont identiques les uns aux autres; de même les axes et les masselottes.

La longueur de chaque partie tronconique $16_1$, $16_2$ de l'axe 16 est égale à une distance x.

La masse de chaque masselotte est supérieure à celle du coulisseau correspondant et peut, par exemple, être sensiblement le double de celle du coulisseau.

Lors du desserrage, les coulisseaux 14 se rapprochent de l'axe longitudinal du mandrin jusqu'à ce que les projections $14_1$ ne dépassent plus le corps 8 permettant ainsi l'éjection de la pièce P par un jet d'air comprimé, par exemple qui est fourni à partir de l'arrière du mandrin à travers des rainures pratiquées dans l'alésage du plateau 1 et de la butée 3 le long du corps 8 du mandrin (non montrées dans les dessins).

Un couvercle 22 ferme à l'avant l'alésage du corps 8 du mandrin.

Le fonctionnement est le suivant:

*Desserrage de la pièce P*: Le tirant 5 avance dans le sens de la flèche $f_d$ et libère le corps de mandrin 8. Ce dernier avance sous l'action du ressort 12 en absorbant le jeu a. La partie antérieure $8_1$ du corps 8 a avancé sur une distance égale au jeu a, ainsi que les coulisseaux 14. De ce fait, la pièce P à usiner est desserrée. Le tirant 5 poursuit son mouvement dans le sens de la flèche $f_d$. Après que le jeu de centrage radial b soit absorbé, le tirant appuie sur l'extrémité arrière du piston 13. Celui-ci avance également dans le sens de la flèche $f_d$ et entraîne par l'intermédiaire du ressort 19 le corps de mandxrin 8; les masselottes 17, les axes 16 et les coulisseaux 14. Par l'action de la force centrifuge, les masselottes 17, dans les lumières pratiquées dans le corps 8 se déplacent radialement en s'éloignant de l'axe longitudinal du mandrin; le jeu $e_1$ est diminué. Les extrémités tronconiques 16 arrière des axes 16 glissent le long des pentes $17_1$ des évidements $17_2$ des masselottes 17 dans le sens de la flèche $f_d$ (c'est-à-dire vers la droite dans la figure) sur une distance nécessairement inférieure à la distance x. Ce déplacement des axes 16 vers la droite (dans la figure) a pour effet que les extrémités tronconiques $16_2$ des axes 16 qui coopèrent avec les faces inclinées $15_1$ des évidements 15 des coulisseaux 14 glissent le long de ces surfaces inclinées $15_1$ et poussent ainsi les coulisseaux 14 radialement en direction de l'axe longitudinal du mandrin jusqu'à ce que les projections $14_1$ des coulisseaux 14 se soient suffisamment effacées pour permettre l'éjection de la pièce P usinée. Cette éjection peut être effectuée par un jet d'air projeté à travers le mandrin dans le sens de la flèche $f_d$. On remarque que l'effort centrifuge s'exerçant sur les masselottes est inversé par la transmission par les axes 16 sur les coulisseaux 14. La masse des coulisseaux 14 étant inférieure à la masse des masselottes 17, les coulisseaux ne peuvent pas s'échapper de leurs logements dans le corps 8.

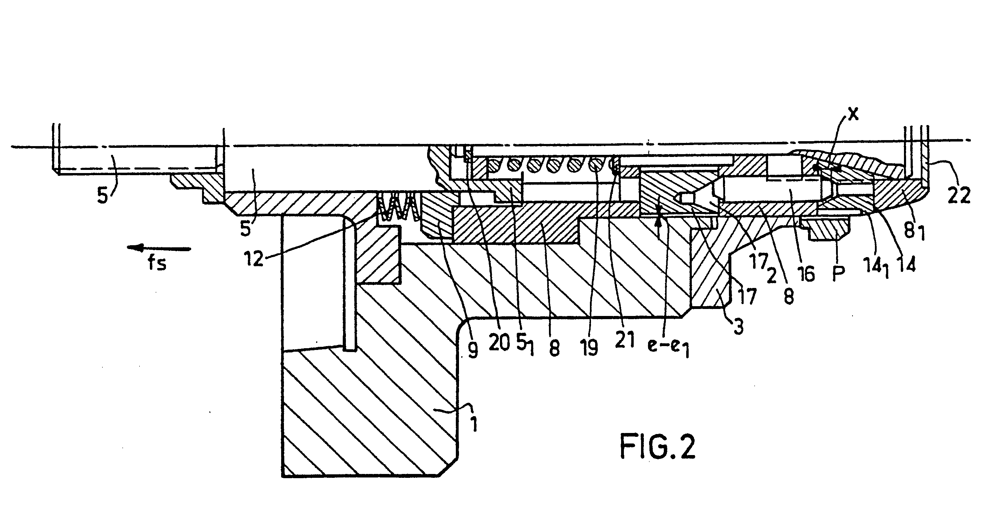

*Serrage de la pièce P*: La pièce P usinée étant éjectée, une nouvelle pièce P est montée sur l'avant du mandrin (voir figure 2). Le tirant 5 se déplace dans le sens de la flèche $f_s$ (vers la gauche dans la figure) ainsi que le piston 13 de commande de serrage et les coulisseaux 14. Les axes 16 sont poussés vers la gauche (dans la figure) par les coulisseaux 14 et rapprochent d'une distance égale à les masselottes à l'axe longitudinal du mandrin; le centrage de la pièce P à usiner est alors réalisé par l'action du piston 13 et les coulisseaux 14. L'effort de centrage exercé par les coulisseaux est une fonction de la pente $13_1$ de la pente $13_1$ de la partie conique du piston 13 et de la force du ressort 19. Lorsque le tirant 5 S'est déplacé dans le sens de la flèche $f_s$ sur une distance suffisante pour ne plus rester en contact avec la face arrière du piston 13 de façon à ce que le jeu de centrage radial b soit rétabli — ledit piston 13 ayant reculé sous l'action du ressort 19 — la pièce P est parfaitement centrée. Le tirant 5 poursuit alors son mouvement dans le sens de la flèche $f_s$ à l'encontre du ressort 12; le jeu a est créé entre le corps 8 de mandrin et le plateau 1 et le serrage facial de la pièce P est effectué entre les faces arrière des projections $14_1$ des coulisseaux 14 et la butée 3 fixée sur le plateau 1.

Un grand nombre de modifications et d'améliorations peuvent être apportées au mandrin décrit ci-dessus, à titre d'exemple, sans pour autant sortir du cadre de l'invention.

**Revendications**

1. Mandrin expansible dans lequel le chargement et le déchargement de la pièce à usiner (P) s'effectuent pendant la rotation du mandrin, à l'avant du mandrin la pièce à usiner (P) étant successivement centrée et serrée contre une butée (3) fixée (ou faisant partie intégrale) sur le (du) plateau (1) de fixation du mandrin sur la machine-outil, lesdits coulisseaux (14) étant disposés dans des lumières pratiquées dans le corps (8) de mandrin, qui est déplaçable axialement de façon à pouvoir se déplacer radialement par rapport à l'axe longitudinal du mandrin, l'action de centrage et de serrage de la pièce (P) à usiner étant commandée par un piston (13) pourvu dune partie conique ($13_1$) (ou des rampes) à son extrémité qui est en contact avec des surfaces coniques correspondantes desdits coulisseaux (14), le mandrin expansible conforme à l'invention se distingue en ce que ce piston (13) est poussé vers l'arrière du mandrin par l'action d'un premier moyen élastique (19) après être libéré par le tirant (5) de commande de serrage et de desserrage de ladite pièce à usiner (P), le serrage définitif de cette pièce étant effectué par ledit tirant (5) après que celui-ci ait parcouru une distance (a) égale à une course de serrage (ou desserrage) facial à l'encontre d'un deuxième moyen élastique (12); le desserrage de la pièce (P) à usiner s'effectuant de manière positive par la force centrifuge agissant sur des masselottes (17) disposées dans des lumières (18) dans le corps (8) du mandrin et reliées chacune par une chaîne mécanique ($17_1$, 16, $15_1$) à chaque coulisseau (14) de façon à ce que chaque masselotte (17), par son déplacement radial résultant de l'action de la force centrifuge vers l'extérieur par rapport à l'axe longitudinal du mandrin, par l'intermédiaire de ladite chaîne mécanique ($17_1$, 16, $15_1$), et après le déplacement vers l'avant du mandrin du piston (13) de serrage (ou de desserrage) sous l'effet d'un déplacement vers l'avant dudit tirant de commande (5) pour le desserrage de ladite pièce (P), agit sur chaque coulisseau (14) de façon à ce que celui-ci se rapproche radialement de l'axe longitudinal du mandrin pour complètement desserrer la pièce à usiner et permettre son éjection, avant le chargement d'une nouvelle pièce (P) à usiner.

2. Mandrin selon la revendication 1, caractérisé en ce que, lors du desserrage de la pièce (P) à usiner, et lorsque chaque masselotte (17), par l'action de la force centrifuge, est déplacée radialement vers l'extérieur dans son logement dans le corps (8) du mandrin, une première rampe ($17_1$) disposée dans un évidement pratiqué dans la partie antérieure de la masselotte et ayant une pente montant vers l'arrière coopère avec l'extrémité arrière ($16_1$) d'un organe de transmission de mouvement (16) dont l'autre extrémité ($16_1$) coopère avec une deuxième rampe ($15_1$) disposée dans un évidement pratiqué dans la partie postérieure de chaque coulisseau (14) correspondant, et ayant une pente montant vers l'avant de façon à ce que chaque coulisseau (14) est rapproché de l'axe longitudinal du mandrin lorsque chaque masselotte (17) correspondante s'éloigne de l'axe longitudinal du mandrin.

3. Mandrin selon la revendication 2, caractérisé en ce que ledit organe de transmission de mouvement (16) est un axe dont les extrémités ($16_1$, $16_2$) sont des parties tronconiques d'une longueur (x) telle que chaque coulisseau est retenu dans sa lumière lors du desserrage total de la pièce (P) à usiner.

4. Mandrin selon la revendication 2, caractérisé en ce que ledit organe de transmission est réalisé sous forme d'une série ou une chaîne de billes adjacentes.

5. Mandrin selon l'une des revendications précédentes, caractérisé en ce que ladite rampe ($17_1$), dans chaque masselotte, et/ou ladite rampe ($15_1$), dans chaque coulisseau, sont la surface d'un évidement conique pratiqué dans ladite masselotte et/ou ledit coulisseau.

6. Mandrin selon l'une des revendications précédentes, caractérisé en ce que le poids de chaque masselotte (17) est supérieur à celui du coulisseau (14) correspondant.

7. Mandrin selon l'une des revendications précédentes, caractérisé en ce que dans un seul mandrin les masselottes (17), les organes de transmission de mouvement et les coulisseaux (14) sont identiques les uns aux autres.

8. Mandrin selon l'une des revendications précédentes, caractérisé en ce que la pièce usinée (P), après le desserrage du mandrin, est éjectée par un jet d'air comprimé.

9. Mandrin selon l'une des revendications précédentes, caractérisé en ce que le tirant (5) présente à son extrémité intérieure un évidement ($5_2$) dont le fond agit sur le piston (13) après avoir absorbé un jeu (b) de centrage radial lors du serrage du mandrin.

10. Mandrin selon l'une des revendications précédentes, caractérisé en ce qu'un jeu de sécurité (c) est prévu entre le corps du mandrin (9) et le plateau (1) pouvant être absorbé lorsque le mandrin n'est pas chargé d'une pièce (7) à usiner.

**Patentansprüche**

1. Spreizbarer Dorn, in welchem, während der Drehung des Dorns vone am Dorn Aufspannen und Lösen des zu bearbeitenden Werkstücks (P) erfolgen, wobei das zu bearbeitende Werkstück (P) nacheinander gegen einen Anschlag (3) zentriert und gespannt wird, welcher befestigt ist an (oder integralen Bestandteil bildet von) der Befestigungsscheibe des Dorns an der Werkzeugmaschine, wobei diese Kulissensteine (14) in im Dorngehäuse (8) ausgesparten Schlitzen angeordnet sind, wobei letzteres axial derart verschiebbar ist, dass es radial bezüglich der Längsachse des Dorns verschiebbar ist und wobei die Zentrier- und Spannwirkung des zu bearbeitenden Werkstücks (P) steuerbar ist durch einen Kolben (13), der mit einem konischen Teil ($13_1$) (oder Rampen) an seinem Ende versehen ist, welches in Kontakt mit konischen entsprechenden Flächen der Kulissensteine (14) steht, wobei der spreizbare Dorn nach der Erfindung sich dadurch unterscheidet, dass der Kolben (13) durch die Wirkung der ersten elastischen Einrichtung (19) gegen die Rückseite des Dorns beaufschlagt wird, nachdem er von der Steuerspann- und Lösespindel (5) des zu bearbeitenden Werkstücks (P) freigegeben ist und wobei das endgültige Spannen dieses Werkstücks von der Spindel (5) vorgenommen wird, nachdem diese einen Weg (a) gleich einem stirnseitigen Spann- (oder Löse-) hub entgegen der zweiten elastischen Einrichtung (12) durchlaufen hat; dass das Lösen des zu bearbeitenden Werkstücks (P) zwangsweise durch die auf Reguliergewichte (17) wirkende Zentrifugalkraft vorgenommen wird, wobei diese in Schlitzen (18) im Dorngehäuse (8) angeordnet und jeweils über eine mechanische Kette ($17_1$, 16, $15_1$) mit jedem Kulissenstein (14) derart verbunden sind, dass jedes Reguliergewicht (17) durch seine radiale Verschiebung aufgrund der Wirkung der Zentrifugalkraft nach aussen, bezogen auf die Längsachse des Dorns vermittels der mechanischen Kette ($17_1$, 16, $15_1$) und nach Verschieben des Spann- oder Lösekolbens (13) gegen die Vorderseite des Dorns unter dem Einfluss einer Verschiebung der Steuerspindel (5) nach vorne zum Lösen des Werkstücks (P) auf jeden Kulissenstein (14) derart wirkt, dass dieser sich radial an die Längsachse des Dorns annähert, um vollständig das zu bearbeitende Werkstück zu lösen und sein Auswerfen, vor dem Aufgeben eines neuen zu bearbeitenden Werkstücks (P) zuzulassen.

2. Dorn nach Anspruch 1, dadurch gekennzeichnet, dass beim Lösen des zu bearbeitenden Werkstücks (P) und, wenn jedes Reguliergewicht (17) unter der Wirkung der Zentrifugalkraft radial nach aussen in seinem Lager im Dorngehäuse (8) verschoben wird, eine erste Rampe ($17_1$), die in einer im vorderen Teil des Reguliergewichts ausgesparten Ausnehmung angeordnet ist und eine nach hinten grösser werdende Steigung aufweist, mit dem rückseitigen Ende ($16_1$) eines Bewegungsübertragungsorgans (16) zusammenwirkt, dessen anderes Ende ($16_1$) mit einer zweiten Rampe ($15_1$) zusammenwirkt, die in einer Ausnehmung angeordnet ist, die im hinteren Teil jedes entsprechenden Kulissensteins (14) ausgespart ist und über eine nach vorne grösser werdende Steigung derart verfügt, dass jeder Kulissenstein (14) an die Längsachse des Dornes angenähert wird, wenn jedes entsprechende Reguliergewicht (17) sich von der Längsachse des Dornes entfernt.

3. Dorn nach Anspruch 2, dadurch gekennzeichnet, dass dieses Bewegungsübertragungsorgan (16) eine Achse ist, deren Enden ($16_1$, $16_2$) kegelstumpfförmige Teile einer Länge (x) derart sind, dass jeder Kulissenstein in seinem Schlitz beim gesamten Lösen des zu bearbeitenden Werkstücks (P) zurückgehalten wird.

4. Dorn nach Anspruch 2, dadurch gekennzeichnet, dass dieses Übertragungsorgan in Form einer Reihe oder einer Kette benachbart der Kugeln hergestellt ist.

5. Dorn nach einem der vorhergehenden Ansprüche, dadurch gekennzeichnet, dass diese Rampe $(17_1)$ in jedem Reguliergewicht und/oder diese Rampe $(15_1)$ in jedem Kulissenstein die Fläche einer konischen in diesem Reguliergewicht und/oder Kulissenstein ausgesparten Ausnehmung sind.

6. Dorn nach einem der vorhergehenden Ansprüche, dadurch gekennzeichnet, dass das Gewicht jedes Reguliergewichts (17) grösser als dasjenige des entsprechenden Kulissensteins (14) ist.

7. Dorn nach einem der vorhergehenden Ansprüche, dadurch gekennzeichnet, dass in einem einzigen Dorn die Reguliergewichte (17), die Bewegungsübertragungsorgane und die Kulissensteine (14) einander gleich sind.

8. Dorn nach einem der vorhergehenden Ansprüche, dadurch gekennzeichnet, dass das bearbeitete Werkstück (P), nach Lösen des Dorns durch einen Strahl komprimierter Luft ausgeworfen wird.

9. Dorn nach einem der vorhergehenden Ansprüche, dadurch gekennzeichnet, dass die Spindel (5) an ihrem innen gelegenen Ende über eine Ausnehmung $(5_2)$ verfügt, deren Boden auf den Kolben (13) nach Absorbieren eines radialen Zentrierspiels (b) beim Spannen des Dornes wirkt.

10. Dorn nach einem der vorhergehenden Ansprüche, dadurch gekennzeichnet, dass ein Sicherheitsspiel (c) zwischen Dornkörper und Aufspannscheibe (1) vorgesehen ist, das, wenn der Dorn nicht mit einem zu bearbeitenden Werkstück (7) beladen ist, absorbiert werden kann.

## Claims

1. An expandable chuck in which loading and unloading of the member (P) to be machined are effected during rotation of the chuck, at the front of the chuck, the member (P) to be machined being successively centred and clamped against an abutment (3) which is fixed to (or forms an integral part of) the plate (1) for fixing the chuck to the machine tool, said sliders (14) being disposed in apertures provided in the chuck body (8), which is displaceable axially so as to be capable of radial displacement with respect to the longitudinal axis of the chuck, the action of centering and clamping the member (P) to be machined being controlled by a piston (13) provided with a conical portion $(13_1)$ (or ramps) at its end which is in contact with corresponding conical surfaces of said sliders (14), the expandable chuck according to the invention is distinguished in that said piston (13) is urged rearwardly of the chuck by the action of a first resilient means (19) after having been freed by the draw member (5) for controlling clamping and release of said member (P) to be machined, definitive clamping of said member being effected by said draw member (5) after the latter has covered a distance (a) equal to a face clamping (or release) travel movement against the force of a second resilient means (12); release of the member (P) to be machined being effected positively by the centrifugal force acting on weight members (17) which are disposed in aper-tures (18) in the body (8) of the chuck and which are each connected by a mechanical chain $(17_1, 16, 15_1)$ to each slider (14) in such a way that each weight member (17), by its radial displacement resulting from the action of the centrifugal force in an outward direction with respect to the longitudinal axis of the chuck, by means of said mechanical chain $(17_1, 16, 15_1)$ and after displacement forwardly of the chuck of the clamping (or release) piston (13) under the effect of a forward movement of said control draw member (5) for releasing said member (P), acts on each slider (14) in such a way that it moves radially towards the longitudinal axis of the chuck to completely release the member to be machined and to permit ejection thereof after the loading of a fresh member (P) to be machined.

2. A chuck according to claim 1, characterised in that, when releasing the member (P) to be machined and when each weight member (17), by the action of centrifugal force, is displaced radially outwardly in its housing in the body (8) of the chuck, a first ramp $(17_1)$ disposed in an operating provided in the front part of the weight member and having a slope which rises rearwardly co-operates with the rearward end $(16_1)$ of a movement transmission member (16), the other end $(16_1)$ of which co-operates with a second ramp $(15_1)$ disposed in an opening provided in the rearward part of each corresponding slider (14) and having a slope which rises forwardly in such a way that each slider (14) is moved towards the longitudinal axis of the chuck when each corresponding weight member (17) moves away from the longitudinal axis of the chuck.

3. A chuck according to claim 2, characterised in that said movement transmission member (16) is an axis member of which the ends $(16_1, 16_2)$ are frustoconical portions of a length (x) such that each slider is retained in its aperture when the member (P) to be machined is totally unclamped.

4. A chuck according to claim 2, characterised in that said transmission member is in the form of a series or a chain of adjacent balls.

5. A chuck according to one of the preceding claims, characterised in that said ramp $(17_1)$, in each weight member, and/or said ramp $(15_1)$ in each slider, are the surface of a conical opening provided in said weight member and/or said slider.

6. A chuck according to one of the preceding claims, characterised in that the weight of each weight member (17) is greater than that of the corresponding slider (14).

7. A chuck according to one of the preceding claims, characterised in that, in a single chuck, the weight members (17), the movement transmission members and the sliders are identical to each other.

8. A chuck according to one of the preceding claims, characterised in that the machined member (P), after release of the chuck, is ejected by a compressed air jet.

9. A chuck according to one of the preceding claims, characterised in that the draw member (5) is provided at its inward end with an opening ($5_2$), the bottom of which acts against the piston (13) after having absorbed a clearance (b) in respect of radial centering when tightening the chuck.

10. A chuck according to one of the preceding claims, characterised in that a safety clearance (c) is provided between the body of the chuck (9) and the plate (1), which can be absorbed when the chuck is not loaded with a member (7) to be machined.

FIG.1

FIG.2

fs

0 034 528